# EUROPEAN PATENT APPLICATION

(11) **EP 2 843 260 A1**
(43) Date of publication of application: **04.03.2015**
(21) Application number: 13781175.8
(22) Date of filing: 23.04.2013
(51) Int. Cl.: F16H 3/08, F16H 3/093, F16D 23/06

(54) **AUTOMATIC MANUAL TRANSMISSION**

(30) Priority: 24.04.2012 KR 20120042379
(71) Applicant: Tenergy, Gyeonggi-do 443-270 (KR)
(72) Inventor: KIM, Secheol, Gyeonggi-do 443-270 (KR)
(74) Representative: Mittler, Enrico
(86) International application number: PCT/KR2013/003428
(87) International publication number: WO 2013/162240

(57) **Abstract**

The present invention relates to an automated manual transmission wherein: a first speed gear and an auxiliary gear are provided on an input shaft connected to a clutch; a plurality of speed gears are connected to a crank shaft of an engine and are provided on a separate input shaft that constantly rotates with an engine, thereby implementing a structure in which the power of the engine is transferred to a driving wheel through the auxiliary gear while shifting gears; and only one clutch and one clutch actuator are comprised. The automated manual transmission comprises: a first speed gear unit which has a first input shaft connected to a clutch disc, and an auxiliary synchronizer and a first gear provided on the first input shaft; a second speed gear unit which is connected to the crank shaft of an engine, and which has a second input shaft that rotates with an engine and a plurality of change gears provided on the second input shaft; and an auxiliary input gear unit which transfers a rotational force of the engine to a driving wheel while shifting the gears in the speed gear units, wherein the first gear is controlled in the first speed gear unit and the second speed gear unit by the auxiliary synchronizer and a first/second gear synchronizer.

## Description

### Technical Field

The present invention relates to an automated manual transmission, and in particular to an automated manual transmission which is characterized in that a first gearshift gear and an auxiliary gear are engaged to a clutch which regulates a driving force transferred from an engine, and a plurality of speed change gears are always directly engaged to a crank shaft of the engine, and the driving force from the engine is transferred through the auxiliary gear to driving wheels while a gear change is going on, so a smooth driving and a smooth gear change are possible while gear changing.

### Background Art

In general, the transmission of a vehicle is a device for converting a driving force generated by an engine into a predetermined rotational force based on the speed of the vehicle and transferring the converted driving force. When the speed of the vehicle becomes fast, the wheels are driven to rotate with the revolutions which are necessary for the driving of the vehicle, so the engine may operate within a predetermined range of revolutions.

Such a transmission may be categorized into a manual transmission wherein a user performs a speed change in such a way to directly handle a clutch pedal, and an automatic transmission wherein the speed change may be automatically performed depending on a driving condition of a vehicle with the aid of an electronic device, etc.

Meanwhile, the automated manual transmission is a transmission combined with the advantages of the manual transmission and the automatic transmission. The driving operations are same as the automatic transmission, so the driving is easy, and the driving force transfer efficiency is good because an additional actuating force such as an operative oil pressure of a clutch, etc. is not necessary while driving, for which the automated manual transmission is advantageous in terms of the fuel efficiency.

The automated manual transmission comprises an electric motor or a hydraulic system for the sake of an automatic gear speed change and clutch control.

After the gear change is completed by means of the hydraulic system or the electric motor, the rotational force of the engine is transferred to the transmission based on the connection of the clutch, and the rotational force of the engine is transferred through the speed gears to the driving wheels.

### Disclosure of Invention

### Technical Problem

In the conventional automated manual transmission, since the rotational force of the engine is not transferred to the driving wheels while the gear change is going on, the acceleration may be degraded during the speed change, and the ride quality is worsened due to the fluctuation at the time of quick acceleration or quick deceleration.

In order to improve the above-mentioned problems, the dual clutch transmission is equipped with a pair of clutches and a pair of clutch actuators. The dual clutch transmission is constituted in such a way that two clutches alternately regulate during the gear change, but the dual cutch transmission is heavy and costs a lot as compared to the conventional automatic transmission.

The present invention is made in an effort to improve the above-mentioned problems. It is an object of the present invention to provide an automated manual transmission characterized in that only one clutch and one clutch actuator are provided, and the rotational force of the engine is transferred to the driving wheels during the gear change, so the ride quality is improved during the gear change with a simplified structure.

### Solution to Problem

To achieve the above object, the present invention is characterized in that a first speed gear and an auxiliary gear are installed at an input shaft connected to a clutch, and a plurality of speed change gears are connected to a crank shaft of the engine and are installed at an additional input shaft which rotates together with the engine, so the driving force from the engine is transferred through the auxiliary gear to driving wheels while the gear change is going on.

To achieve the above object, there is provided an automated manual transmission including a first speed gear unit including a first input shaft connected to a clutch disc, an auxiliary synchronizer installed thereon, and a first gearshift gear; a second speed gear unit including a second input shaft connected to a crank shaft of the engine and rotating together with the engine and a plurality of speed gears installed thereon; and an auxiliary input gear unit which transfers the rotational force of the engine to the driving wheels while the gear change is going on at the speed gear unit, and the first gearshift gear is connected to the first speed gear unit and the second speed gear unit, respectively, by means of the auxiliary synchronizer and the 1/2-gearshift synchronizer.

The first speed gear unit includes a first input shaft connected to the clutch; a first gearshift gear which is installed at the first input shaft and the output shaft and transfers driving force; and an auxiliary synchronizer which regulates the first gearshift gear and the first input shaft.

The second speed gear unit includes a second input shaft which is connected to the crank shaft of the engine and always rotates together with the crank shaft; a plurality of speed gears which are installed at the second input shaft and the output shaft and transfer driving force; and a plurality of synchronizers which regulate the second input shaft or the output shaft and the speed gear.

It is characterized in that the auxiliary input gear unit includes an auxiliary gear which is installed at the first input shaft and the output shaft; and an auxiliary synchronizer which regulates the auxiliary gear and the first input shaft.

### Advantageous effects

In the automated manual transmission according to the present invention, since the rotational torque of the engine is transferred through the auxiliary gear to the driving wheels while the gear change is going on, any disconnection in the transfer of the driving force does not occur during the gear change, so the acceleration and ride quality is improved.

In addition, the gear change may be automated using only one clutch and one clutch actuator, the present invention may provide more simplified structure as compared to the conventional dual clutch transmission or the automatic transmission while obtaining advantages in terms of the manufacturing cost and weight.

### Brief Description of Drawings

Figure 1 is a view illustrating a state wherein the engine is in operation at the neutral position of the automated manual transmission according to an exemplary embodiment of the present invention.
Figure 2 is a view illustrating a state just after a vehicle has started by changing the gears using the first gearshift gear in the automated manual transmission according to an exemplary embodiment of the present invention.
Figure 3 is a view illustrating a state that a vehicle is being driven at over a predetermined vehicle speed using the first gearshift gear in the automated manual transmission according to an exemplary embodiment of the present invention.
Figure 4 is a view illustrating a state wherein a driving force is being transferred through an auxiliary gear, which means an initial stage of the gear change from the first gearshift gear to the second gearshift gear in the automated manual transmission according to an exemplary embodiment of the present invention.
Figure 5 is a view illustrating a state wherein the second gearshift gear is engaged, which means an intermediate space of the gear change from the first gearshift gear to the second gearshift gear in the automated manual transmission according to an exemplary embodiment of the present invention.
Figure 6 is a view illustrating a state wherein a vehicle is being driven using the second gearshift gear after the gear change is completed to the second gearshift gear in the automated manual transmission according to an exemplary embodiment of the present invention.
Figure 7 is a view illustrating a state wherein the gear change is going on to the third gearshift gear, namely, a state wherein the third gearshift gear is being connected after the auxiliary gear has operated in the automated manual transmission according to an exemplary embodiment of the present invention.
Figure 8 is a view illustrating a state wherein a vehicle is being driven using the third gearshift gear after the gear change to the third gearshift gear is completed in the automatic manual transmission according to an exemplary embodiment of the present invention.
*Legends of Reference Numbers on the Major Components in the Drawing*
1: engine 2: flywheel 3: clutch cover 4: clutch disc 5: damper spring 6: clutch housing 7: clutch release bearing 8: oil seal
10: first speed gear unit 11: first input shaft 12: first gearshift gear 13: auxiliary synchronizer 14: 1/2-gearshift synchronizer
20: second speed gear unit 21: second input shaft 22: second gearshift gear 23: third gearshift gear 24: fourth gearshift gear 25: 3/4-gearshift synchronizer
30: auxiliary input gear unit 31: auxiliary gear
40: output shaft 41: output gear 50: driving wheel 51: differential gear

### Best modes for carrying out the invention

The automated manual transmission according to the exemplary embodiments of the present invention will be described with reference to the accompanying drawings.

It is noted that the thicknesses of the lines or the dimensions of the components in the drawings may be exaggerated for the sake of clarification and convenience in the course of the descriptions.

The terms used below are defined in consideration of the functions of the present invention may differ based on the intention or practice of the user or operator.

Therefore, the definitions of such terms should be interpreted based on the whole contents recited throughout the present specification.

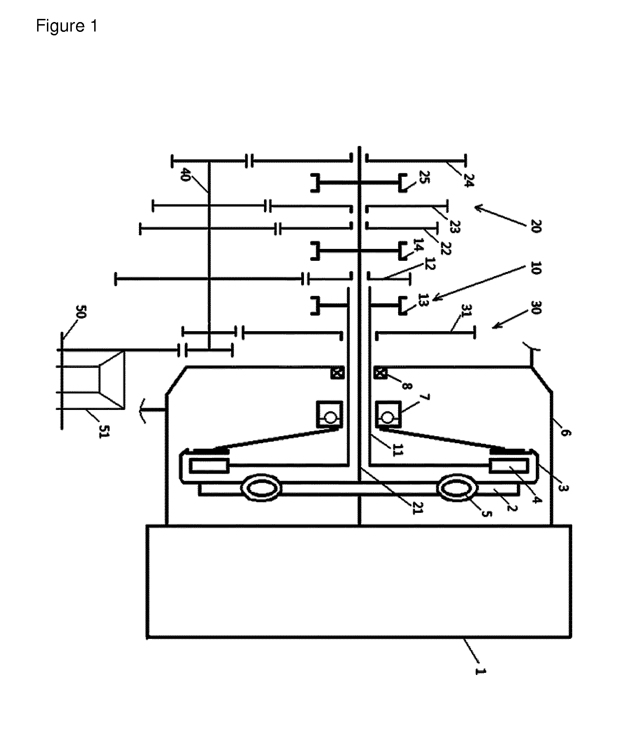

Referring to Figures 1 to 8, the automated manual transmission according to an exemplary embodiment of the present invention includes a first speed gear unit 10, a second speed gear unit 20, and an auxiliary input gear unit 30.

The first speed gear unit 10 includes a first gearshift gear 12, and clutches 3 and 4 and is characterized in that the driving torque of the engine 1 is increased to a predetermined gear ratio and is transferred to driving wheels 50 for thereby starting the vehicle.

The second speed gear unit 20 is configured to convert the rotation speed of the engine 1 based on a predetermined gear ratio of each speed gear through a plurality of speed gears 22, 23 and 24 which each are connected to a flywheel 2 of the engine, thus transferring the driving force of the engine to the output shaft 40.

The auxiliary input gear unit 30 includes an auxiliary gear 31 and an auxiliary synchronizer 13 engaged to a first input shaft 11 and an output shaft 40, respectively. The auxiliary input gear unit 30 connects the clutches 3 and 4 at the time of the gear change, so the driving force of the engine 1 can be transferred through the auxiliary gear 31 to the driving wheels 50.

The first speed gear unit 10 includes a first input shaft 11, a first gearshift gear 12 and an auxiliary synchronizer 13. The input shaft 11 is connected to a clutch disc 4, and the auxiliary synchronizer 13 serves to regulate the first gearshift gear 12 and the input shaft 11.

Therefore, in case that the auxiliary synchronizer 13 connects the first gearshift gear 12, and the clutches 3 and 4 are connected, such a connection means a connection using the first gearshift gear like in the conventional manual transmission. More specifically, such connection is the same as the gear change of the typical manual transmission, wherein a driving, stop or a creep driving is available based on the regulations or semi-clutch states of the clutches 3 and 4.

Here, the clutches 3 and 4 may perform the same functions even though a conventional starting clutch such as a wet multi-plate clutch or an electromagnetic clutch is used instead of a dry single plate clutch.

The second speed gear unit 20 includes a second input shaft 21 directly connected to the flywheel 2, a plurality of speed gears 22, 23 and 24 and synchronizers 14 and 25.

The speed gears 22, 23 and 24 from the second gearshift gear to the fourth gearshift gear are installed at the second input shaft 21 and the output shaft 40, and each of the synchronizers 14 and 25 is installed at the second input shaft 21, so each of the speed gears 22, 23 and 24 may be regulated by way of the second input shaft 21 or the output shaft 40 like in the manual transmission.

The auxiliary input gear unit 30 includes an auxiliary gear 31, and an auxiliary synchronizer 13.

The auxiliary gear 31 is installed at the first input shaft 11 and the output shaft 40, respectively, and the auxiliary synchronizer 13 configured to regulate the first gearshift gear 12 and the input shaft 11 at the first speed gear unit 10 is installed so as to regulate the auxiliary gear 31 and the first input shaft 11.

At this time, instead of eliminating the auxiliary gear installed at the output shaft 40, the auxiliary gear 31 may be installed only at the first input shaft 11 for the sake of a direct engagement to the output gear 41 which drives the differential gear, thus shortening the entire length of the transmission.

Meanwhile, the actuator which is necessary for automation includes one clutch actuator which serves to regulate the clutch, and one speed change actuator which serves to perform the operations of the synchronizer, which are enough for such automation.

The operations of the automated manual transmission having the thusly constituted structure according to an exemplary embodiment of the present invention will be described.

First, in case that the gear is at the neutral position (refer to Figure 1) in a state wherein the engine is in operation while the vehicle is stopped, the output shaft 40 is stopped along with the driving wheels 50, and the flywheel 2, the second input shaft 21 connected to the flywheel 2, the 1/2-gearshift synchronizer 14 and the 3/4-gearshift synchronizer 25 rotate with the same revolutions as the flywheel 2.

In addition, the first input shaft 11 connected to the clutch disc 4 and the auxiliary synchronizer 13 installed at the first input shaft 11 always rotate with the same revolutions.

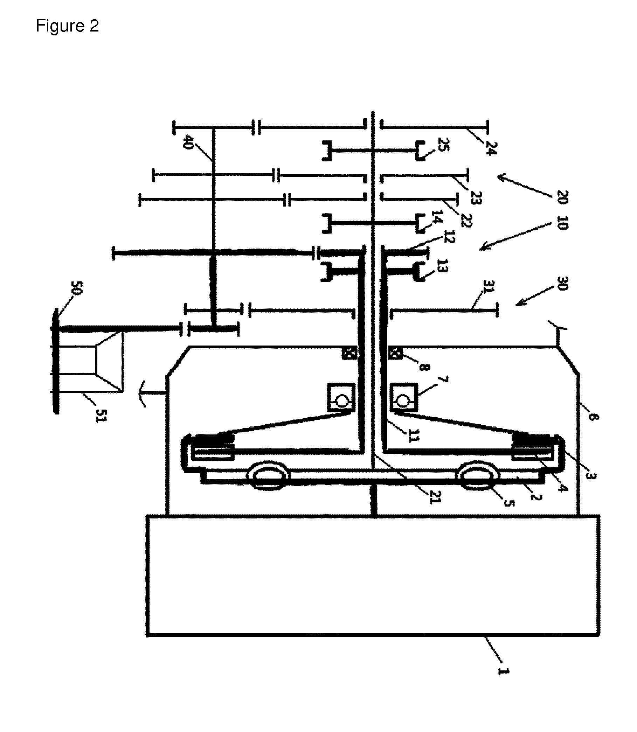

At this time, when the gear change lever is shifted from the neutral position to the forward driving gearshift gear "D", the auxiliary synchronizer 13 connects the first gearshift gear 12 and the first input shaft 11. When the clutches 3 and 4 are connected, the vehicle starts moving. At this time, the vehicle starts moving in the same method as when the vehicle starts from the first gearshift gear in the typical manual transmission. In case that the vehicle is driven at below a predetermined speed, this state is maintained (refer to Figure 2).

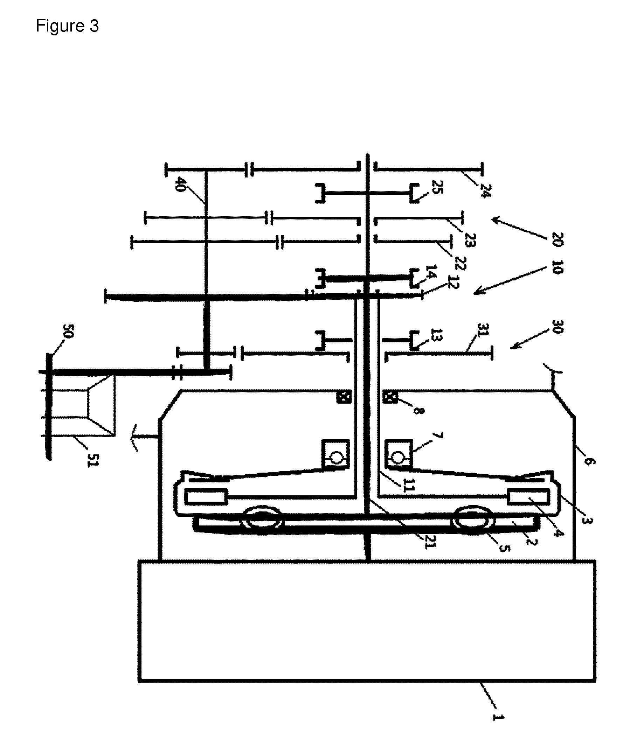

When the vehicle is driven at over a predetermined speed using the first gearshift gear, the 1/2-gearshift synchronizer 14 disconnects the connection of the clutches 3 and 4 based on the first gearshift gear 12 and the second input shaft 21, and the auxiliary synchronizer 13 moves and connects the auxiliary gear 31 and the first input shaft 11, instead of disconnecting the connection of the first gearshift gear 12 and the first input shaft 11 (refer to Figure 3).

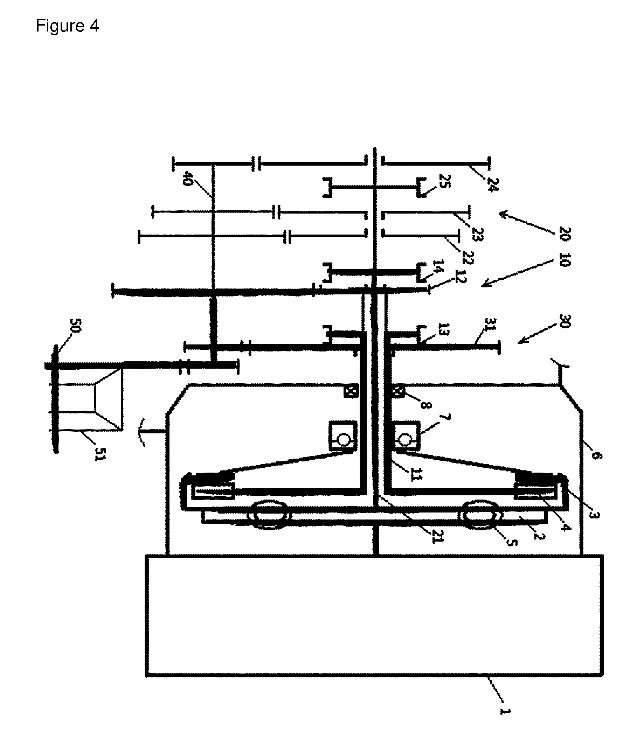

Thereafter, when the clutches 3 and 4 are connected, the driving force of the engine is transferred through the auxiliary gear 31 (refer to Figure 4).

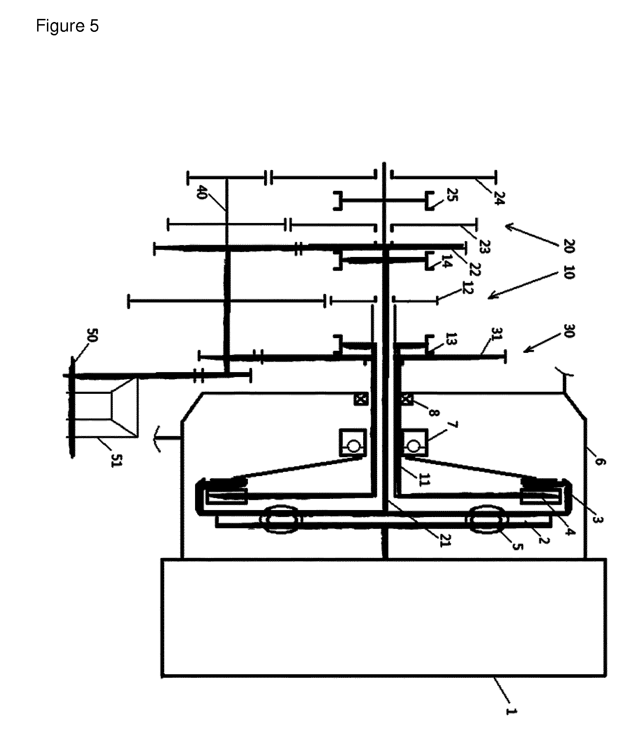

So, when the rotation speed of the engine is lowered, and the rotation speed of the first input shaft 11 connected thereto is lowered, the second gearshift gear 22 and the second input shaft 21 are connected by moving the 1/2-gearshift synchronizer 14 which was connecting the first gearshift gear 12 (refer to Figure 5). Here, since such a connection is possible when the second gearshift gear 22 and the second input shaft 21 rotate at the same speed, the connection may be made using a dog clutch, instead of the 1/2-gearshift synchronizer 14.

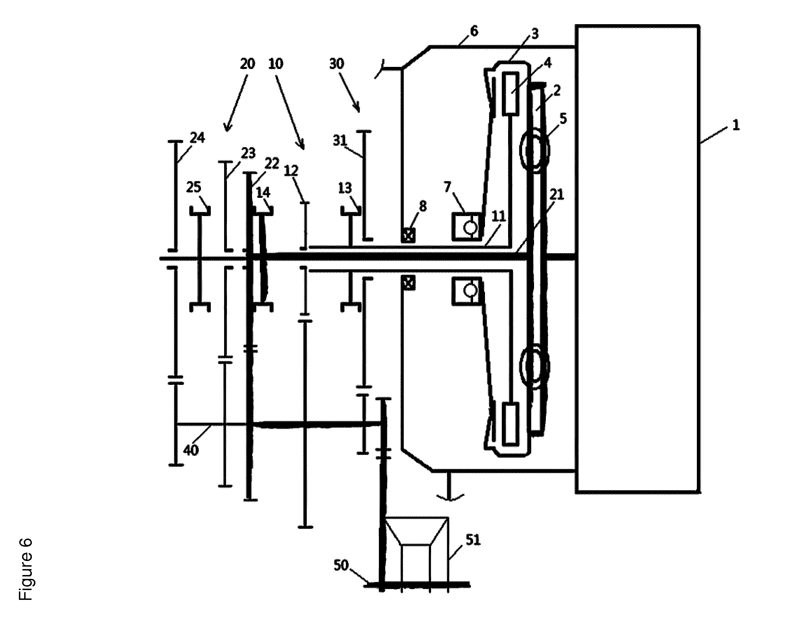

When the 1/2-gearshift synchronizer 14 connects the second gearshift gear 22 and the second input shaft 21, the driving force of the engine is forced to be transferred only through the second gearshift gear 22 by disconnecting the connection of the clutches 3 and 4. So, the gear change to the second gearshift gear is completed, and the transmission remains unchanged while driving with the second gearshift gear (refer to Figure 6).

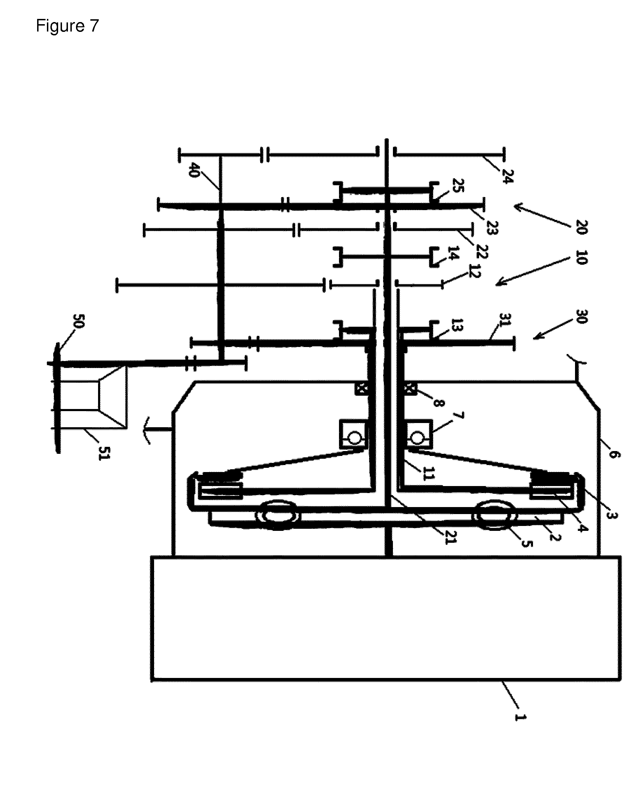

When the gear is changed from the second gearshift gear to the third gearshift gear, the driving force of the engine is transferred through the auxiliary gear 31 by connecting the clutches 3 and 4. When the revolutions of the engine starts lowering, the 1/2-gearshift synchronizer 14 is shifted to the neural position, and then the third gearshift gear 23 and the second input shaft 21 are connected by way of the 3/4-gearshift synchronizer 25 (refer to Figure 7).

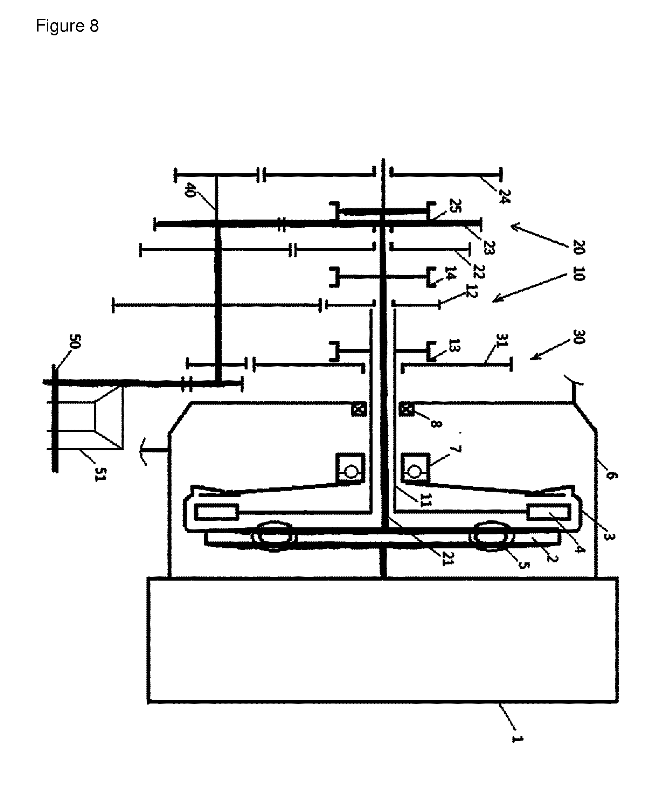

When the clutches 3 and 4 are disconnected after the third gearshift gear 23 is connected to the second input shaft 21, the driving force of the engine is transferred only through the third gearshift gear. So, the gear change to the third gearshift gear is completed, and this state is maintained while driving with the third gearshift gear (refer to Figure 8).

The same gear change is operated when changing the speed from the third gearshift gear to the fourth gearshift gear.

When changing the gear using the auxiliary gear 31, the clutches 3 and 4 are connected while driving with the third gearshift gear or fourth gearshift gear, and when the rotation speed of the engine starts reducing, the connection of the 3/4- gearshift synchronizer 25 is disconnected, so the gear change is completed. When this state is maintained, the driving force of the engine is converted based on the gear ratio of the auxiliary gear 31 and is transferred to the driving wheels 50, so the auxiliary gear 31 may be used as one of the gear change gearshift gears.

In case of the acceleration, when the gear is changed to the lower gearshift gears, namely, the gear change from the fourth gearshift gear to the third gearshift gear or the gear change from the third gearshift gear to the second gearshift gear, the gear change is performed in the method similar with up-shift (the gear change to the higher gearshift gear).

The procedures wherein the clutches 3 and 4 are connected, and the driving force is transferred through the auxiliary gear 31, and then the connection of the fourth gearshift gear or the third gearshift gear is disconnected are same, however thereafter it is allowed that the slipping increases at the clutches 3 and 4 so as to let the rotation speed of the engine to gradually increase, and at the time the rotation speed of the second input shaft 21 becomes same as the rotation speed of the speed gear which will be connected, the gear of the speed gearshift and the second input shaft 21 are connected by the synchronizers 14 and 25.

### Modes for carrying out the invention

As described above, the present invention is characterized in that the driving force is transferred through each speed gear when it is not the speed gear section, and while the gear change is going on, the driving force is transferred through the auxiliary gear 31, so the speed may be changed without any disconnection in the driving torque.

The present invention has been described along with the exemplary embodiments illustrated in the drawings, but it should be noted that the present invention is not limited thereto. The present invention might expand to all the possible modifications coming from the exemplary embodiments in the drawings within a scope recited in the claims.

### Industrial Applicability

In the field of the transmission for a vehicle, it is possible to manufacture an automated transmission which is compact and saves manufacturing cost, and so the present invention may substitute the conventional automatic transmission, so the present invention may be used for the transmissions of all kinds of vehicles. In addition, the present invention may be used as an industrial transmission, using the same principles of the present invention.

## Claims

1. An automated manual transmission, comprising:
a clutch which regulates a driving force from an engine;
a first input shaft which is connected to the clutch and an auxiliary gear which is connected to the first input shaft;
a second input shaft which is connected to a crank shaft of the engine and always rotates together with the crank shaft and several speed gears which are connected to the second input shaft;
a first gearshift gear which is installed between the first input shaft and the second input shaft;
an auxiliary synchronizer which is installed at the first input shaft and regulates the first gearshift gear or the auxiliary gear;
a 1/2-gearshift synchronizer or a dog clutch which is installed at the second input shaft and regulates the first gearshift gear; and
a plurality of synchronizers which are configured to regulate each speed gear and the output shaft,
wherein the rotational force of the engine is transferred through the auxiliary gear to driving wheels based on the operation of the clutch while the gear change is going on.

2. The transmission of claim 1, wherein there are only provided one clutch actuator which operates the clutch and one actuator which operates each synchronizer or a dog clutch.

3. The transmission of claim 1, wherein when a vehicle is driven at over a predetermined speed after the vehicle starts driving by connecting the first input shaft and the first gearshift gear using the auxiliary synchronizer, the first gearshift gear and the second input shaft are connected using the 1/2-gearshift synchronizer or the dog clutch installed at the second input shaft, and then the connection of the auxiliary synchronizer which was connecting the first input shaft and the first gearshift gear is disconnected.

4. The transmission of claim 1, wherein since the auxiliary gear installed at the input shaft is directly engaged with the output gear engaged with a differential gear, an auxiliary gear is not additionally installed at the output shaft.

5. The transmission of claim 1, wherein when a vehicle is normally driven in a state wherein the speed change is completed, the driving force from the engine is transferred only through the auxiliary gear.
